# EUROPEAN PATENT SPECIFICATION

(11) **EP 2 648 420 B1**
(45) Date of publication and mention of the grant of the patent: **12.10.2016**
(21) Application number: 12163123.8
(22) Date of filing: 04.04.2012
(51) Int. Cl.: H04R 1/24, H04R 3/12, H04R 17/00, H04R 9/06, B06B 1/02, B60R 25/10, G08B 13/00

(54) **Vehicle alarm system sounder device**
Summervorrichtung für Fahrzeugalarmsystem
Dispositif de génération de son système d'alarme de véhicule

(43) Date of publication of application: 09.10.2013
(73) Proprietor: Volvo Car Corporation, 40 531 Göteborg (SE)
(72) Inventor: Hirche, Mark, 425 41 Hisings-Kärra (SE); Magnusson, Tomas, 416 64 Göteborg (SE); Olsson, Kjell, 507 53 Borås (SE); Sturesson, Henrik, 41728 Göteborg (SE)
(74) Representative: Widahl, Jenny Marie

(56) References cited:
- CN-U- 201 898 590
- DE-A1- 3 828 634
- US-A- 4 401 848
- US-A1- 2012 057 728

## Description

### TECHNICAL FIELD

The present invention relates to a vehicle alarm system sounder device. The present invention further relates to a vehicle alarm system comprising such a sounder device and a vehicle comprising such a vehicle alarm system.

### BACKGROUND

Vehicle alarm systems may be used to prohibit theft of vehicles and/or theft from vehicles. Such alarm system may be arranged to generate an alarm sound upon an unauthorized entry or attempts of an unauthorized entry of a vehicle, such as a braking of a window of the vehicle or a door-lock picking. In some jurisdictions there are legal requirements of that a sounder device used in vehicle alarm systems only may be used for alarm system purposes. Also, in today's vehicles, there is an increased demand for additional security system generating indicating sounds, such as alarm sounds. These security systems are often vital from a safety perspective. However, an unwanted disadvantage is that such systems often require an increased number of components. An increased number of components are space consuming, may add complexity to vehicles, and may add costs, both in terms of manufacturing costs of vehicles comprising such systems and in terms of the components per se. Therefore, there is a need for a vehicle alarm system sounder device which can reduce production costs and fulfil legal requirements.

DE 38 28 634 A1 discloses a vehicle information and alarm system. US 2012/057728 A1 and CN 201 898 590 U disclose vehicle sounder devices each comprising two sound generating surfaces. US 4 401 848 A discloses a voice overheat warning system for an automotive vehicle.

### SUMMARY

An object of the present invention is to provide a vehicle alarm system sounder device which reduces production costs and fulfils legal requirements.

According to an aspect of the invention, the object is achieved by a vehicle alarm system sounder device, comprising a first transducer element and a first sound generating surface, the first transducer element being arranged in connection with the first sound generating surface to thereby generate an alarm sound upon a first signal being sent from a control device. The sounder device comprises a second transducer element being arranged in connection with the first sound generating surface, or a second sound generating surface of the sounder device, to thereby generate an indicating sound, being different from the alarm sound, upon a second signal being sent from a control device. The sounder device comprises a transducer driver wherein the sounder device comprises a switch having at least a first position and a second position, the first position constituting a position wherein an electrical connection between the transducer driver and the first transducer element is closed, and the second position constituting a position wherein an electrical connection between the transducer driver and the second transducer element is closed, and the control device is a micro-controller arranged to control the switch between the first and the second positions, the transducer driver being adapted to receive the first and second signals being sent from the control device, and adapted to produce a first output signal if the first signal is received, and to produce a second output signal if the second signal is received, wherein the first transducer element is adapted to generate the alarm sound upon being fed with the first output signal, and wherein the second transducer element is adapted to generate the indication sound upon being fed with the second output signal.

Consequently, when the micro-controller controls the switch to the first position, an electrical connection is formed between the transducer driver and the first transducer element. When the electrical connection is formed, the transducer driver may provide the first output signal to the first transducer element, e.g. upon a request from the micro-controller, whereby the first transducer element may generate the alarm sound. Likewise, when the micro-controller controls the switch to the second position, an electrical connection is formed between the transducer driver and the second transducer element. When the electrical connection is formed, the transducer driver may provide the second output signal to the second transducer element, e.g. upon a request from the micro-controller, whereby the second transducer element may generate the indicating sound.

Since the vehicle alarm system sounder device is provided with a first transducer element and a second transducer element, wherein the first transducer element is arranged to generate an alarm sound and the second transducer element is arranged to generate an indicating sound, being different from the alarm sound, the vehicle alarm system sounder device can be used to generate sounds for two different functions, e.g. in two different systems. Since two different functions are achieved by the vehicle alarm system sounder device, production costs are reduced in comparison with the use of two sounder devices and said legal requirements are fulfilled since the sounder device is used for alarm system purposes.

As a result, the above mentioned object is achieved.

According to some embodiments, the first transducer element is arranged in connection with the first sound generating surface, and the second transducer element is arranged in connection with a second sound generating surface of the sounder device. Thus, the vehicle alarm system sounder device may comprise two sound generating surfaces. According to some embodiments, dimensions of the first sound producing surface differ from dimensions of the second sound generating surface. The first and the second sound generating surfaces may be comprised in a shared housing.

According to some embodiments, the first transducer element and the second transducer element are arranged in connection with the first sound generating surface. Accordingly, the vehicle alarm system sounder device may comprise one sound generating surface, wherein the first and second transducer element are in connection with the one sound generating surface. Thus, upon a first signal being sent from a control device, the first transducer element may drive the sound generating surface such that the sound generating surface generates a sound with certain sound characteristics, i.e. a certain frequency and/or sound pressure level, and upon a second signal from a control device, the second transducer element may drive the sound generating surface such that the sound generating surface generates a sound with a different sound characteristics than the first transducer element. Thereby, two sounds with different sound characteristics may be using only one sound generating surface. Also, the second transducer element may differ from the first transducer element with respect to type of transducer element and/or dimensions of transducer element to thereby produce two sounds with different sound characteristics using only one sound generating surface.

A sound generating surface, as described in any of the embodiments above, may e.g. comprise a membrane and/or a speaker cone. The sound generating surface may be made by a plastic material, a paper material, a metallic material, and/or a fabric material.

The indicating sound may differ from the alarm sound with respect to the sound characteristics such as frequency, alternation of the frequency, and/or sound pressure level. Thereby, the indicating sound may be easy to distinguish from the alarm sound.

According to some embodiments, the sounder device is a battery backed up sounder device. Thus, the sounder device may comprise one or more batteries arranged to supply electric current to the first and/or the second transducer element. Accordingly, in case a burglar is trying to turn off an alarm system by disconnecting a main battery from the sounder device, the sounder device may generate an alarm sound even if the main battery is disconnected from the sounder device. In embodiments wherein the sounder device is a battery backed up sounder device, the sounder device may be arranged to generate an alarm sound upon a disconnection of the main battery.

According to some embodiments, the first transducer element is a piezo element. Also, according to some embodiments, the second transducer element is a piezo element. Thus, one of the first or the second transducer element may be a piezo element, or both the first and the second transducer elements may be piezo elements. Since piezo elements are small in size in comparison with other types of transducer elements, the sounder device may be produced with small dimensions. Also, piezo elements are less sensitive to environmental disturbances such as moist, temperature variations, and shocks than other types of transducer elements. Therefore, a more robust sounder device may be provided. Furthermore, piezo elements are less expensive than other types of transducer elements. Accordingly, the sounder device may be produced at low cost.

Thus, the vehicle alarm system sounder device may comprise a first piezo element and a second piezo element wherein the first piezo element is arranged in connection with the first sound generating surface to thereby generate an alarm sound upon a first signal being sent from a control device, and the second piezo element is arranged in connection with the first sound generating surface, or a second sound generating surface of the sounder device, to thereby generate an indicating sound, being different from the alarm sound, upon a second signal being sent from a control device.

According to alternative embodiments, or in combination with at least one embodiment described above, the first and/or the second transducer element may comprise an electro-dynamic element, an electro-static element, and/or a magneto-static element.

The control device may comprise a micro controller, a switch, a relay, a control device comprised in an alarm system, and/or a control device comprised in a security system. According to some embodiment, a first control device, comprised in an alarm system, is arranged to provide the first signal, and a second control device, comprised in a security system, is arranged to provide the second signal. According to alternative embodiments, one control device is arranged to provide the first and the second signals. In such embodiments, the one control device may be in communication with an alarm system and a security system.

According to some embodiments, the indicating sound constitutes an indicating sound indicating that a driver is leaving, or is about to leave, a vehicle hosting the sounder device, with a propulsion unit being active. Thus, according to some embodiments, the vehicle alarm system sounder device may be comprised in a security system being adapted to alert a driver of a vehicle that the driver is leaving, or is about to leave, a vehicle hosting the sounder, with a propulsion unit being active. In the US, there are upcoming legal proposals requiring an external sounder device to warn a driver of a vehicle in case the driver leaves the vehicle with the a propulsion unit being active. Thus, according to these embodiments, a sounder device is provided fulfilling the upcoming legal proposals at a low cost.

According to some embodiments, the indicating sound constitutes an indicating sound indicating that a driver is leaving or is about to leave, a vehicle hosting the sounder device, with a key in a key switch being arranged to activate a propulsion unit. Such key switch may be a mechanical ignition switch, or an electric ignition switch, e.g. an ignition switch being adapted to sense a magnetic field and/or an ignition switch being adapted to sense a presence and/or identification of a key. The indicating sound may be generated in case a driver is leaving or is about to leave, a vehicle hosting the sounder, with a key in a key switch being positioned in a propulsion activation position or in an propulsion deactivation position or in any position in between.

According to some embodiments, the sounder device is hosted in a vehicle at least partially being propelled by an electric motor, the indicating sound constituting an indicating sound indicating a presence of the vehicle. Such a vehicle, at least partially being propelled by an electric motor, may be a hybrid vehicle or an electric vehicle. Such vehicles may be more silent than a vehicle being propelled by a combustion engine. Therefore, a sound being generated may facilitate detection of the vehicle.

Also, in embodiments wherein the sounder device is hosted in a vehicle at least partially being propelled by an electric motor, and such vehicles may be more silent than a vehicle being propelled by a combustion engine, an indicating sound indicating that a driver is leaving or is about to leave, a vehicle hosting the sounder, with a propulsion unit being active, may alert the driver that the propulsion unit is active.

Further features of, and advantages with, the present invention will become apparent when studying the appended claims and the following detailed description. Those skilled in the art will realize that different features of the present invention may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 and 2 illustrates a vehicle alarm system sounder device 3, according to some embodiments.
Fig. 3 illustrates a vehicle 7 comprising a sounder device 3 according to some embodiments and a vehicle alarm system 19 comprising a sounder device 3 according to some embodiments.

### DETAILED DESCRIPTION

The present invention will now be described more fully with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout.

Well-known functions or constructions will not necessarily be described in detail for brevity and/or clarity.

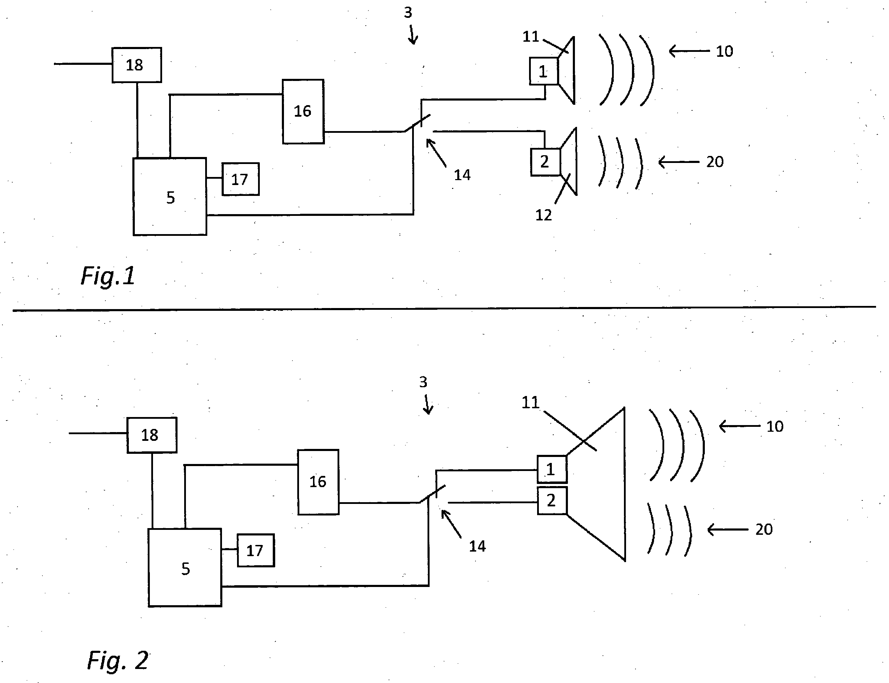

Fig. 1 illustrates a vehicle alarm system sounder device 3, comprising a first transducer element 1 and a first sound generating surface 11. The first transducer element 1 is arranged in connection with the first sound generating surface 11 to thereby generate an alarm sound 10 upon a first signal being sent from a control device 5. The sounder device 3 comprises a second transducer element 2 being arranged in connection with a second sound generating surface 12 of the sounder device 3, to thereby generate an indicating sound 20, being different from the alarm sound 10, upon a second signal being sent from a control device 5.

The sounder device comprises a transducer driver 16, arranged to drive the first or the second transducer elements 1, 2. The sounder device 3 comprises a switch 14 having at least a first position and a second position, the first position constituting a position wherein an electrical connection to the first transducer element 1 is closed, and the second position constituting a position wherein an electrical connection to the second transducer element 2 is closed, and the control device 5 is a micro-controller 5 arranged to control the switch 14 between the first and the second position. The micro-controller 5 may be adapted to send a signal to the transducer driver 16 to thereby activate the transducer driver 16. Accordingly, in order to get the first transducer element 1 to generate an alarm sound 10, the micro-controller 5 may send a first signal to the switch 14 to thereby close an electrical connection between the transducer driver 16 and the first transducer element 1, and a second signal to the transducer driver 16 to thereby activate the transducer driver 16. In order to get the second transducer element 2 to generate the indicating sound 20, the micro-controller 5 may send a third signal to the switch 14 to thereby close an electrical connection between the transducer driver 16 and the second transducer element 2, and a fourth signal to the transducer driver 16 to thereby activate the transducer driver 16. The transducer driver 16 may be adapted to produce a first output signal upon activation by the second signal from the micro-controller 5 and a second output signal upon activation by the fourth signal from the micro-controller 5. The first transducer element 1 may be adapted to generate the alarm sound 10 when being fed with the first output signal from the transducer driver 16, and the second transducer element 2 may be adapted to generate the indicating sound 20 when being fed with the second output signal. Thereby, an indication sound 20 being different from the alarm sound 10 may be produced.

Also, the second transducer element 2 may be of different type and/or of different dimensions than the first transducer element 1. Furthermore, the second sound generating surface 12 may be of different type and/or of different dimensions than the first sound generating surface 1. Thus, the design of the first transducer element 1 and/or the first sound generating surface 11 together with the first output signal from the transducer driver 16 may ensure that the alarm sound 10 is generated, and the design of the second transducer element 2 and/or the second sound generating surface 12 together with the second output signal from the transducer driver 16 may ensure that the indicating sound 20 is generated. According to alternative embodiments, the transducer driver 16 may be adapted to produce one output signal upon activation by the micro-controller 5, wherein the design of the first transducer element 1 and/or the first sound generating surface 11 ensures that the alarm sound 10 is generated, and wherein the design of the second transducer element 2 and/or the second sound generating surface 12 ensures that the indicating sound 20 is generated.

According to some embodiments, the switch 14 may be comprised in the transducer driver 16.

The micro-controller 5 may be adapted to receive at least one signal from a communication bus 18 and/or an alarm system and/or a security system. Upon the at least one signal, the micro-controller 5 may be adapted to send the first or the third signal to the switch 14 and the second and the fourth signal to the transducer driver 16.

The first and/or the second transducer element 1, 2 may comprise a piezo electric transducer element, an electro-dynamic transducer element, an electro-static transducer element, and/or a magneto-static transducer element. The first and/or the second transducer element 1, 2 may comprise the same type of transducer elements, or may comprise different types of transducer elements.

The sounder device may be a battery backed up sounder device. Accordingly, the sounder device 3 may comprise one or more batteries 17 arranged to supply electric current to the micro-controller 5, the transducer driver 16, the switch 14, the first transducer element 1, and/or the second transducer element. Thus, the sounder device may be arranged to be able to generate the alarm sound 10 and/or the indicating sound despite a main power supply being cut off. The one or more batteries 17 may be rechargeable batteries. In such embodiments, the batteries 17 may be adapted to be charged from the main power supply.

Fig. 2 illustrates a vehicle alarm system sounder device 3, according to some embodiments. These embodiments resemble the embodiments illustrated in Fig. 1. However, in the embodiments illustrated in Fig. 2, the sounder device 3 comprises only a first sound generating surface 11. Accordingly, the sounder device comprises a first transducer element 1 and the first sound generating surface 11. The first transducer element 1 is arranged in connection with the first sound generating surface 11 to thereby generate an alarm sound 10 upon a first signal being sent from a control device 5. The sounder device 3 comprises a second transducer element 2 being arranged in connection with the first sound generating surface 11 to thereby generate an indicating sound 20, being different from the alarm sound 10, upon a second signal being sent from a control device 5.

Accordingly, the first and the second transducer elements 1, 2 are arranged in connection with the first sound generating surface 11. The connection between the first and/or the second transducer element 1, 2 and the first sound generating surface 11 may be a direct connection or may comprise a part connecting the first and/or the second transducer element 1, 2 and the first sound generating surface 11.

Further features of these embodiments correspond essentially to those described in connection to Fig. 1 embodiments.

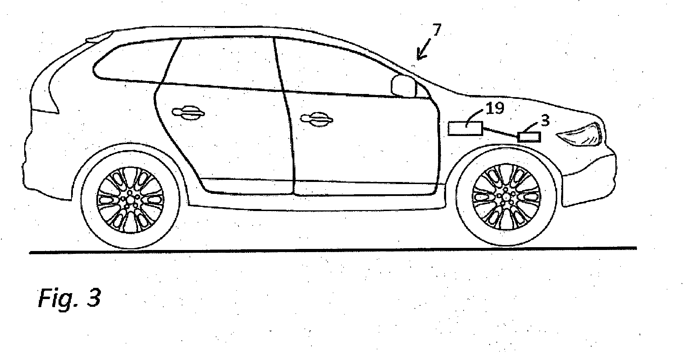

Fig. 3 illustrates a vehicle alarm system 19 comprising a sounder device 3 according to some embodiments. Also, Fig. 3 illustrates a vehicle 7. The vehicle 7 comprises a vehicle alarm system 19 according to some embodiments.

It is to be understood that the foregoing is illustrative of various example embodiments and the invention is not to be limited to the specific embodiments disclosed and that modifications to the disclosed embodiments, combinations of features of disclosed embodiments as well as other embodiments are intended to be included within the scope of the appended claims.

As used herein, the term "comprising" or "comprises" is open-ended, and includes one or more stated features, elements, steps, components or functions but does not preclude the presence or addition of one or more other features, elements, steps, components, functions or groups thereof.

As used herein, the term "and/or" includes any and all combinations of one or more of the associated listed items.

As used herein, the common abbreviation "e.g.", which derives from the Latin phrase "exempli gratia," may be used to introduce or specify a general example or examples of a previously mentioned item, and is not intended to be limiting of such item. If used herein, the common abbreviation "*i.e*.", which derives from the Latin phrase "id est," may be used to specify a particular item from a more general recitation.

The terminology used herein is for the purpose of describing particular embodiments only and is not intended to be limiting of the invention. As used herein, the singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

## Claims

1. A vehicle alarm system sounder device (3), comprising a first transducer element (1) and a first sound generating surface (11), the first transducer element (1) being arranged in connection with the first sound generating surface (11) to thereby generate an alarm sound (10) upon a first signal being sent from a control device (5), the sounder device (3) comprising a second transducer element (2) being arranged in connection with the first sound generating surface (11), or a second sound generating surface (12) of the sounder device (3), to thereby generate an indicating sound (20), being different from the alarm sound (10), upon a second signal being sent from the control device (5), the sounder device (3) comprises a transducer driver (16) **characterized in that** the sounder device (3) comprises a switch (14) having at least a first position and a second position, the first position constituting a position wherein an electrical connection between the transducer driver (16) and the first transducer element (1) is closed, and the second position constituting a position wherein an electrical connection between the transducer driver (16) and the second transducer element (2) is closed, the control device (5) being a micro-controller (5) arranged to control the switch (14) between the first and the second positions, the transducer driver (16) being adapted to receive the first and second signals being sent from the control device (5), and adapted to produce a first output signal if the first signal is received, and to produce a second output signal if the second signal is received, wherein the first transducer element (1) is adapted to generate the alarm sound (10) upon being fed with the first output signal, and wherein the second transducer element (2) is adapted to generate the indication sound (20) upon being fed with the second output signal.

2. The sounder device (3) according to claim 1, **characterized in that** the sounder device (3) comprises one or more batteries (17) arranged to supply electric current to the micro-controller (5) and the transducer driver (16).

3. The sounder device (3) according to claim 1 or 2, **characterized in that** the first transducer element (1) is a first piezo element.

4. The sounder device (3) according to any one of the preceding claims, **characterized in that** the second transducer element (2) is a second piezo element.

5. A vehicle alarm system (19), **characterized in that** it comprises a sounder device (3) according to any one of the preceding claims.

6. A vehicle (7), **characterized in that** the vehicle (7) comprises a vehicle alarm system (19) according to claim 5.

7. The vehicle (7) according to claim 6, wherein the indicating sound (20) constitutes an indicating sound (20) indicating that a driver is leaving, or is about to leave, the vehicle (7), with a propulsion unit being active.

8. The vehicle (7) according to claim 6 or 7, wherein the indicating sound (20) constitutes an indicating sound (20) indicating that a driver is leaving, or is about to leave, the vehicle (7), with a key in a key switch being arranged to activate a propulsion unit.

9. The vehicle (7) according to any one of the claims 6-8, wherein the vehicle (7) is at least partially propelled by an electric motor and the indicating sound (20) constitutes an indicating sound (20) indicating a presence of said vehicle (7).

## Patentansprüche

1. Fahrzeugalarmsystem-Schallerzeugungsvorrichtung (3), umfassend ein erstes Umformerelement (1) und eine erste Schallerzeugungsoberfläche (11), wobei das erste Umformerelement (1) in Verbindung mit der ersten Schallerzeugungsoberfläche (11) angeordnet ist, um dadurch einen Alarmton (10) auf ein erstes Signal, das von einer Steuervorrichtung (5) gesandt wird, zu erzeugen, die Schallerzeugungsvorrichtung (3) umfassend ein zweites Umformerelement (2), das in Verbindung mit der ersten Schallerzeugungsoberfläche (11) oder einer zweiten Schallerzeugungsoberfläche (12) der Schallerzeugungsvorrichtung (3) angeordnet ist, um dadurch einen Anzeigeton (20), der von dem Alarmton (10) verschieden ist, auf ein zweites Signal, das von der Steuervorrichtung (5) gesandt wird, zu erzeugen, wobei die Schallerzeugungsvorrichtung (3) ein Umformeransteuerelement (16) umfasst, **dadurch gekennzeichnet, dass** die Schallerzeugungsvorrichtung (3) einen Schalter (14) mit mindestens einer ersten Position und einer zweiten Position umfasst, wobei die erste Position eine Position bildet, in der eine elektrische Verbindung zwischen dem Umformeransteuerelement (16) und dem ersten Umformerelement (1) geschlossen ist, und die zweite Position eine Position bildet, in der eine elektrische Verbindung zwischen dem Umformeransteuerelement (16) und dem zweiten Umformerelement (2) geschlossen ist, wobei die Steuervorrichtung (5) eine Mikrosteuerung (5) ist, angeordnet zum Steuern des Schalters (14) zwischen der ersten und der zweiten Position, wobei das Umformeransteuerelement (16) angepasst ist, das erste und das zweite Signal, die von der Steuervorrichtung (5) gesandt werden, zu empfangen, und angepasst ist, ein erstes Ausgangssignal zu erzeugen, wenn das erste Signal empfangen wird, und ein zweites Ausgangssignal zu erzeugen, wenn das zweite Signal empfangen wird, wobei das erste Umformerelement (1) angepasst ist, den Alarmton (10) zu erzeugen, nachdem ihm das erste Ausgangssignal zugeführt wurde, und wobei das zweite Umformerelement (2) angepasst ist, den Anzeigeton (20) zu erzeugen, nachdem ihm das zweite Ausgangssignal zugeführt wurde.

2. Schallerzeugungsvorrichtung (3) nach Anspruch 1, **dadurch gekennzeichnet, dass** die Schallerzeugungsvorrichtung (3) eine oder mehrere Batterien (17) umfasst, die angeordnet sind, der Mikrosteuerung (5) und dem Umformeransteuerelement (16) elektrischen Strom zuzuführen.

3. Schallerzeugungsvorrichtung (3) nach Anspruch 1 oder 2, **dadurch gekennzeichnet, dass** das erste Umformerelement (1) ein erstes Piezo-Element ist.

4. Schallerzeugungsvorrichtung (3) nach einem der vorstehenden Ansprüche, **dadurch gekennzeichnet, dass** das zweite Umformerelement (2) ein zweites Piezo-Element ist.

5. Fahrzeugalarmsystem (19), **dadurch gekennzeichnet, dass** es eine Schallerzeugungsvorrichtung (3) nach einem der vorstehenden Ansprüche umfasst.

6. Fahrzeug (7), **dadurch gekennzeichnet, dass** das Fahrzeug (7) ein Fahrzeugalarmsystem (19) nach Anspruch 5 umfasst.

7. Fahrzeug (7) nach Anspruch 6, wobei der Anzeigeton (20) einen Anzeigeton (20) bildet, der anzeigt, dass der Fahrer das Fahrzeug (7) verlässt oder im Begriff ist, es zu verlassen, während eine Antriebseinheit aktiv ist.

8. Fahrzeug (7) nach Anspruch 6 oder 7, wobei der Anzeigeton (20) einen Anzeigeton (20) bildet, der anzeigt, dass der Fahrer das Fahrzeug (7) verlässt oder im Begriff ist, es zu verlassen, während ein Schlüssel in einem Schlüsselschalter zum Aktivieren einer Antriebseinheit angeordnet ist.

9. Fahrzeug (7) nach einem der Ansprüche 6-8, wobei das Fahrzeug (7) mindestens teilweise von einem elektrischen Motor angetrieben wird und der Anzeigeton (20) einen Anzeigeton (20) bildet, der eine Präsenz des Fahrzeugs (7) anzeigt.

## Revendications

1. Dispositif sonore (3) de système d'alarme de véhicule, comprenant un premier élément transducteur (1) et une première surface génératrice de son (11), le premier élément transducteur (1) étant conçu, en relation avec la surface génératrice de son (11), pour générer un son d'alarme (10) suite à la transmission d'un premier signal depuis un dispositif de commande (5), le dispositif sonore (3) comprenant un deuxième élément transducteur (2) conçu, en relation avec la première surface génératrice de son (11), ou une deuxième surface génératrice de son (12) du dispositif sonore (3), pour générer un son indicateur (20), différent du son d'alarme (10), suite à la transmission d'un deuxième signal depuis le dispositif de commande (5), le dispositif sonore (3) comprenant un excitateur (16) de transducteur, le dispositif sonore (3) étant **caractérisé en ce qu'**il comprend un commutateur (14) comportant au moins une première position et une deuxième position, la première position constituant une position dans laquelle une liaison électrique entre l'excitateur (16) de transducteur et le premier élément transducteur (1) est fermée, et la deuxième position constituant une position dans laquelle une liaison électrique entre l'excitateur (16) de transducteur et le deuxième élément transducteur (2) est fermée, le dispositif de commande (5) étant un microcontrôleur (5) conçu pour commander le commutateur (14) entre la première et la deuxième position, l'excitateur (16) de transducteur étant adapté à recevoir les premier et deuxième signaux transmis depuis le dispositif de commande (5) et adapté à produire un premier signal de sortie en cas de réception du premier signal et à produire un deuxième signal de sortie en cas de réception du deuxième signal, le premier élément transducteur (1) étant adapté à générer le son d'alarme (10) lorsque le premier signal de sortie lui est appliqué, et le deuxième élément transducteur (2) étant adapté à générer le son indicateur (20) lorsque le deuxième signal de sortie lui est appliqué.

2. Dispositif sonore (3) selon la revendication 1, le dispositif sonore (3) étant **caractérisé en ce qu'**il comprend une ou plusieurs piles (17) conçues pour alimenter en courant électrique le microcontrôleur (5) et l'excitateur (16) de transducteur.

3. Dispositif sonore (3) selon la revendication 1 ou 2, **caractérisé en ce que** le premier élément transducteur (1) est un premier élément piézoélectrique.

4. Dispositif sonore (3) selon l'une quelconque des revendications précédentes, **caractérisé en ce que** le deuxième élément transducteur (2) est un deuxième élément piézoélectrique.

5. Système d'alarme (19) de véhicule, **caractérisé en ce qu'**il comprend un dispositif sonore (3) selon l'une quelconque des revendications précédentes.

6. Véhicule (7), le véhicule (7) étant **caractérisé en ce qu'**il comprend un système d'alarme (19) de véhicule selon la revendication 5.

7. Véhicule (7) selon la revendication 6, dans lequel le son indicateur (20) constitue un son indicateur (20) indiquant qu'un conducteur est en train ou sur le point de quitter le véhicule (7) avec une unité de propulsion qui est active.

8. Véhicule (7) selon la revendication 6 ou 7, dans lequel le son indicateur (20) constitue un son indicateur (20) indiquant qu'un conducteur est en train ou sur le point de quitter le véhicule (7) avec une clé dans un contacteur à clé conçu pour activer une unité de propulsion.

9. Véhicule (7) selon l'une quelconque des revendications 6 à 8, lequel véhicule (7) est au moins partiellement propulsé par un moteur électrique, et dans lequel le son indicateur (20) constitue un son indicateur (20) indiquant une présence dudit véhicule (7).
